# EUROPEAN PATENT APPLICATION

(11) **EP 2 323 039 A1**
(43) Date of publication of application: **18.05.2011**
(21) Application number: 10176817.4
(22) Date of filing: 15.09.2010
(51) Int. Cl.: G06F 12/08

(54) **Cache memory control apparatus and cache memory control method**

(30) Priority: 18.09.2009 JP 2009217727
(71) Applicant: FUJITSU LIMITED, Kawasaki-shi, Kanagawa 211-8588 (JP)
(72) Inventor: Kojima, Hiroyuki, Kawasaki-shi Kanagawa 211-8588 (JP)
(74) Representative: Lewin, David Nicholas

(57) **Abstract**

A cache memory controller searches a second cache tag memory holding a cache state information indicating whether any of multi-processor cores storing a registered address of information registered within its own first cache memory exists. When a target address coincides with the obtained registered address, the cache memory controller determines whether an invalidation request or a data request to a processor core including a block is necessary based on the cache status information. Once it is determined that invalidation or a data request for the processor including the block, the cache memory controller determines whether a retry of instruction based on a comparison result of the first cache tag memory is necessary, if it is determined that invalidation or a data request for the processor including the block.

## Description

### FIELD

Embodiments of the invention discussed herein relate to a cache memory control apparatus and a cache memory control method.

### BACKGROUND

A central processing unit (CPU) utilizes a cache memory to resolve data delay that occurs between a main storage device and the CPU. The cache memory has a multi-stage structure, and includes a level-1 (L1) cache and a level-2 (L2) cache for example. The L2 cache holds a copy of a tag of the L1 cache, and utilizes the held L1 cache tag to maintain coherency between the L1 cache and the L2 cache. The L1 cache may be an instruction/operand separate cache that individually manages an operand cache and an instruction cache.

A CPU including a plurality of processor cores in which the processor cores individually containing an L1 cache and share an L2 cache is known. In such a configuration, the L2 cache holds copies of operand cache tags and instruction cache tags, the number of which corresponds to the number of the processor cores.

Because the L1 caches are contained in the L2 cache, a block in an L1 cache may be identified by a position of the corresponding block on the L2 cache. In other words, a block in an L1 cache may be identified if information corresponding to an L2 index is provided. In a configuration in which the L2 cache includes a plurality of WAYways, L2-way is also managed in addition to the information corresponding to the L2 index.

It is not necessary that the information corresponding to the L2 index should include all the bits of the L2 index. It is only necessary that the information includes, as an index difference, bits left after removing bits that are common between an L1 index and the L2 index. By using the index difference, the physical amount for holding the copies of the L1 cache tags can be significantly reduced.

In a cache system in which the copies of the L1 cache tags are managed using the L2 index and the L2-way, combinations of the L2 index and the L2-way are compared to search an L1 cache tag. In the case where a combination of the L2 index and the L2-way obtained from a copy of an L1 cache tag coincides with a combination of the L2 index and the L2-way hit in the L2 cache (L2-HIT-way), a hit in the L1 cache (L1-HIT) is obtained. This means that the L1-HIT is found after the L2-HIT-way is determined.

In the case where the L2 cache tag does not hold information on the L1 cache tags, it is necessary to totally resort to the copies of the L1 cache tags for information on a relevant block in a processor core. Therefore, determination as to processes for the processor cores are all made after the L1-HIT, which degrades the latency.

A cache system in which an L2 cache tag holds all the information on L1 cache tags, rather than holding copies of the L1 cache tags, to increase the machine cycle is also known. However, because the L2 cache has a larger capacity than the L1 cache, an unused portion (L1 cache tag information) which is equivalent to the difference between the capacities of both the caches may appear. Thus, as the number of the processor cores is increased, the L1 cache tag information to be held in the L2 cache tag is increased, which decreases the resource efficiency.

A cache system in which information to be cached in a plurality of processor cores is compressed to utilize the resources effectively and increase the machine cycle at the same time is known. In such cache system, an L2 cache tag holds, as information for management, cache state information indicating the cache state of an L1 cache and a core number. The cache state information indicates various states of the L1 cache, such as: whether or not there is any processor core that caches the relevant data; whether or not the data is cached in a single processor in the case where there is any processor core that caches the data; and which way of the L1 cache the data is registered in, in the case where the data is cached in a single processor. The core number is information identifying the processor core caching the data in the case where the relevant data is cached in a single processor core.

With the L2 cache tag holding the cache state information indicating the cache state of the L1 cache and the core number, the cache state of the L1 cache can be identified by searching the L2 cache in the case where the data is cached in a single processor core. However, in the case where the data is cached in a plurality of processor cores, the cores caching the relevant block may not be identified. In such a configuration, therefore, an invalidation process is performed for all the processor cores.

Japanese Laid-open Patent Application Publication No. 05-342101, Japanese Laid-open Patent Application Publication No. 2006-40175 and International Publication Pamphlet No. WO 2007/094046 disclose cache-related techniques.

In recent years, there is a tendency toward addressing the limitation in improving the performance of a single core by providing a multiplicity of cores by increasing the power consumption, which has brought about an increase in number of processor cores. Thus, there is a desire to reduce the power consumed by the processor, and hence to thoroughly reduce the physical amount.

In order to increase the processing speed, information on the L1 cache tags is provided to the L2 cache tag in an attempt to make process determinations. In the case where a store instruction is provided for a block possessed by a plurality of processor cores, that is, a shared block, for example, an invalidation process is performed for all the processor cores.

With an increased number of processor cores, an invalidation process unnecessarily performed for processor cores that actually do not cache the data may occur. Such invalidation process may be a factor that decreases the processing performance of the processor. By enhancing the management information to be added to the L2 cache tag by adding a bit indicating whether or not each processor core caches the data, no invalidation process would unnecessarily be performed even in the case where the block is shared. However, such an approach would increase the physical amount of the L2 cache tag, and might degrade the use efficiency of the resources and increase the power consumption.

Therefore, it is desirable to reduce the physical amount of the L2 cache tag without degrading the latency or being affected by an increase in number of processor cores.

An embodiment of the invention has been made in view of the above issues, and therefore has an object to provide a cache memory control apparatus and a cache memory control method that are fast in speed with a small physical amount.

### SUMMARY

According to an aspect of the invention, a cache memory control apparatus that controls a second cache memory shared by a plurality of processor cores each including a first cache memory includes a second cache tag memory that holds a registered address of information registered in the second cache memory and cache state information which indicates whether or not there is any processor core that holds the information registered at the registered address in its own first cache memory, in correlation with a second cache index defined as a part of the registered address of the information registered in the second cache memory; a first comparing section that searches through the second cache tag memory using the second cache index included in a search target address as a key, and compares the registered address obtained as a result of the search with the search target address; a first process determining section that, in the case where the search target address and the registered address coincide with each other, determines whether or not an invalidation request or a data request for a processor core possessing a relevant block of the information is necessary based on the corresponding cache state information; a first cache tag memory that holds, in correlation with an address of information held in the first cache memory of each of the plurality of processor cores, a first cache index to be used for a search through the first cache memory and an index difference between the first cache index and the second cache index; a second comparing section that searches through the first cache tag memory using the first cache index of the search target address as a key, and compares a combination of the index difference and the first cache index of the search target address obtained as a result of the search with the second cache index of the search target address; and a second process determining section that, in the case where the first process determining section determines that an invalidation request or a data request for a processor core possessing the block is necessary, determines whether or not a retry of an instruction is necessary using results of the comparison made by the second comparing section.

The cache memory control apparatus and the cache memory control method according to the embodiment are fast in speed with a small physical amount.

The object and advantages of the invention will be realized and achieved by at least the features, elements, and combinations particularly pointed out in the claims.

It is to be understood that both the foregoing general description and the following detailed description are exemplary and explanatory and are not restrictive of the invention, as claimed.

### BRIEF DESCRIPTION OF DRAWINGS

Fig. 1 illustrates a cache memory control apparatus according to an embodiment;
Fig. 2 illustrates a CPU that uses the cache memory control apparatus according to the embodiment;
Fig. 3 illustrates a cache memory control apparatus according to a comparative example;
Fig. 4 illustrates how an index is created from an address;
Fig. 5 illustrates a comparative example in which the cache state of an L1 cache memory is registered in an L2 cache tag as compared to the embodiment;
Fig. 6 illustrates examples of a status code and a core number in the comparative example;
Fig. 7 illustrates an L2 cache tag according to an embodiment;
Fig. 8 illustrates examples of a status code;
Fig. 9 illustrates a determination process performed by a first process determining section;
Fig. 10 illustrates an L2 cache tag provided with a control flag;
Fig. 11 illustrates an example in which the control flag is valid;
Fig. 12 illustrates a determination process performed by the first process determining section in the case where control flags are provided;
Fig. 13 illustrates a logical circuit that generates a control flag srcCore-L1D-VAL;
Fig. 14 illustrates a logical circuit that generates a control flag sorneCore-L1I-HIT;
Fig. 15 illustrates a circuit that makes a determination as to a store instruction performed by the first process determining section;
Fig. 16 illustrates a logical circuit that makes a determination as to a retry of a process for a requesting core; and
Fig. 17 illustrates a logical circuit that makes a determination as to a retry of a process for a possessing core.

### DESCRIPTION OF EMBODIMENTS

A cache memory control apparatus and a cache memory control method according to embodiments will be described below with reference to the drawings. The embodiments are not intended to limit the scope of the present invention.

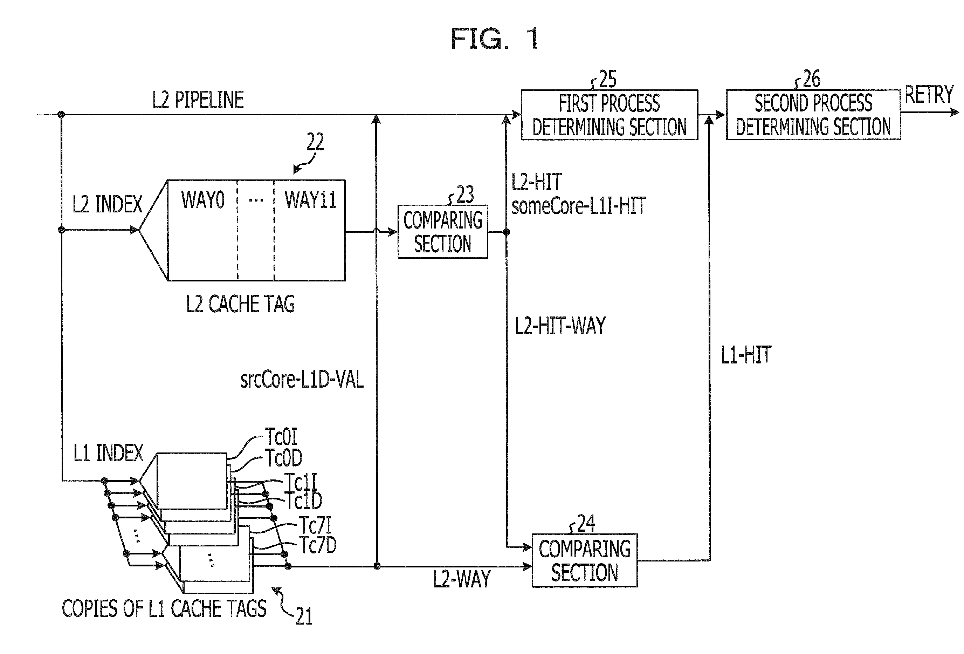

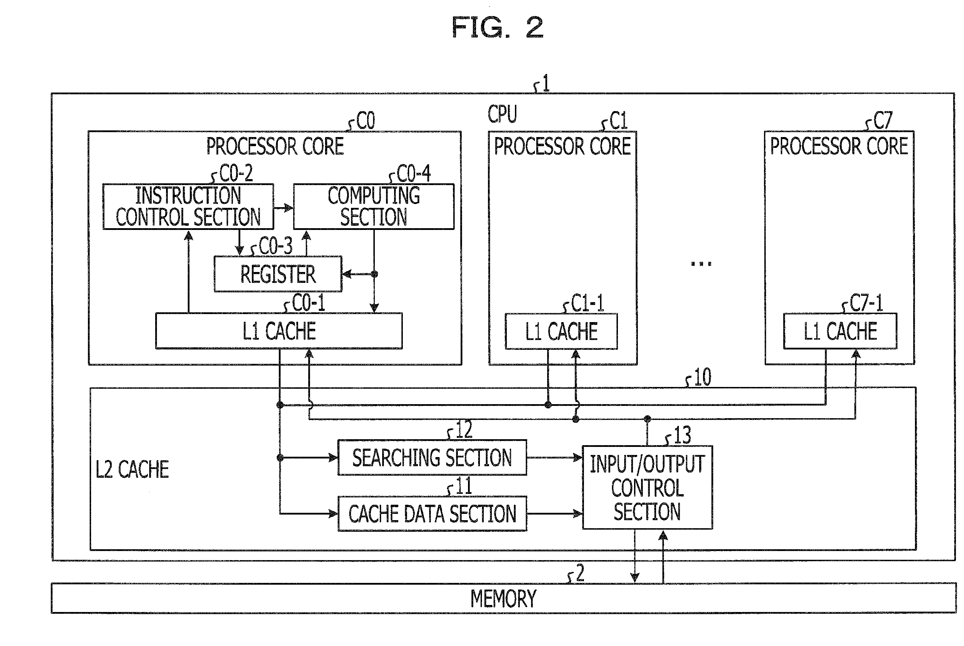

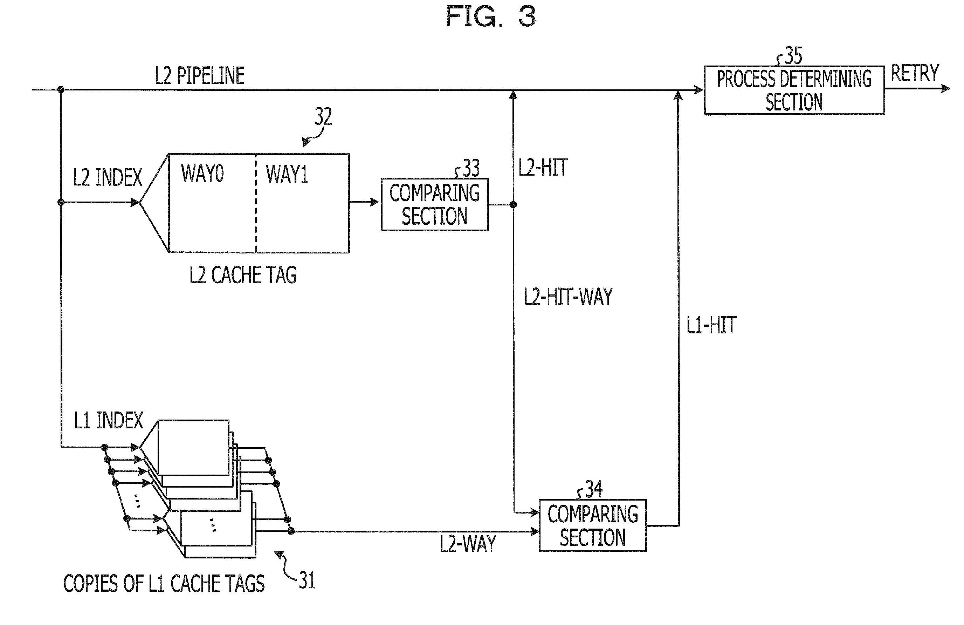

Fig. 1 illustrates a configuration of a cache memory control apparatus according to an embodiment. Fig. 2 illustrates a configuration of a CPU that uses the cache memory control apparatus according to the embodiment. Fig. 3 illustrates a configuration of a cache memory control apparatus according to a comparative example.

A CPU 1 illustrated in Fig. 2 is connected to a memory 2 serving as a main storage device. The CPU 1 includes a plurality of processor cores and an L2 cache 10. In Fig. 2, the CPU 1 includes eight processor cores C0 to C7. The processor core C0 includes an instruction control section C0-2, a computing section C0-4, a register C0-3, and an L1 cache C0-1.

The instruction control section C0-2 is a processing section that decodes an instruction and controls the processing order. The instruction control section C0-2 reads an instruction to be processed by the CPU 1 from a storage device, that is, the memory 2 or a cache memory, decodes the instruction, and outputs the decoding results.

The computing section C0-4 is a processing section that performs computation. The computing section C0-4 reads data to be used by an instruction to be executed from a storage device, performs computation in accordance with the instruction decoded by the instruction control section C0-2, and outputs the computation results.

The register C0-3 is used for data exchange between the instruction control section C0-2 and the computing section C0-4 or the like.

The L1 cache C0-1 and the L2 cache 10 are each a cache memory that temporarily holds data input to and output from the instruction control section C0-2 and the computing section C0-4. The L1 cache C0-1 is a cache dedicated to the processor core C0. In the example of Fig. 2, the L1 cache C0-1 is an instruction/operand separate cache that individually manages an operand cache and an instruction cache. The L2 cache 10 is a cache memory commonly used by the processor cores C0 to C7, and caches operands and instructions without discrimination.

The L1 cache C0-1 is faster in speed and smaller in capacity than the L2 cache 10. The processor core C0 uses the L1 cache C0-1 and the L2 cache 10 with different speeds and capacities in a hierarchical manner. Specifically, the processor core C0 holds in the L2 cache 10 a part of data stored in the memory 2, and further holds in the L1 cache C0-1 a part of the content held in the L2 cache 10. That is, the L2 cache 10 includes information held in the L1 caches C0-1.

The processor cores C1 to C7 are configured in substantially the same way as the processor core C0. The processor cores C1 to C7 respectively include dedicated L1 caches C1-1 to C7-1, and use the L1 caches C1-1 to C7-1 and the commonly used L2 cache 10 in a staged manner. Similar to the processor core C0, the processor cores C1 to C7 also include an instruction control section, a computing section, and a register, which are not illustrated or described.

The L2 cache 10 includes a cache data section 11, a searching section 12, and an input/output control section 13. The cache data section 11 is a main portion of the cache memory, and holds and reads data. In general, data in a cache is read and written in units of blocks with a predetermined size.

The searching section 12 functions as a cache memory control section that controls the L2 cache memory 10 by managing the address of data registered in the cache data section 11. In the case where data is managed in units of blocks, the searching section 12 manages the addresses of the blocks.

The input/output control section 13 controls input to and output from the memory 2 and input to and output from the processor cores C0 to C7 using the results of a search made by the searching section 12 and information read from the cache data section 11.

The cache memory control apparatus illustrated in Fig. 1 is used as the searching section 12 of the L2 cache 10 illustrated in Fig. 2. The cache memory control apparatus illustrated in Fig. 1 includes L1 cache tags 21, an L2 cache tag 22, comparing sections 23 and 24, a first process determining section 25, and a second process determining section 26.

The L1 cache tags 21 are copies of tags of the L1 caches C0-1 to C7-1 possessed by the processor cores C0 to C7. Since the L1 caches C0-1 to C7-1 are each an instruction/operand separate cache, the L1 cache tags 21 are provided individually for instructions and operands held in the L1 caches C0-1 to C7-1.

A tag TC0I illustrated in Fig. 1 is a tag of the instruction cache of the L1 cache C0-1. A tag TC0D is a tag of the operand cache of the L1 cache C0-1.

Likewise, a tag TC1I is a tag of the instruction cache of the L1 cache C1-1. A tag TC1D is a tag of the operand cache of the L1 cache C1-1.

A tag TC7I is a tag of the instruction cache of the L1 cache C7-1. A tag TC7D is a tag of the operand cache of the L1 cache C7-1.

The L2 cache tag 22 holds the registered address of data registered in the L2 cache. In the L2 cache tag 22, the registered address of data registered in the L2 cache is correlated with cache state information, which indicates whether or not there is any processor core that holds in its L1 cache memory the data registered in the L2 cache. The L2 cache tag 22 includes way 0 to way 11.

The L2 cache tag 22 uses a part of the address of the registered data as an index for use in a search through the L2 cache. Such an index for use in a search through the L2 cache is referred to as an L2 index. Likewise, the L1 cache tag 21 uses a part of the address of the registered data as an index for use in a search through the L1 cache. Such an index for use in a search through the L1 cache is referred to as an L1 index.

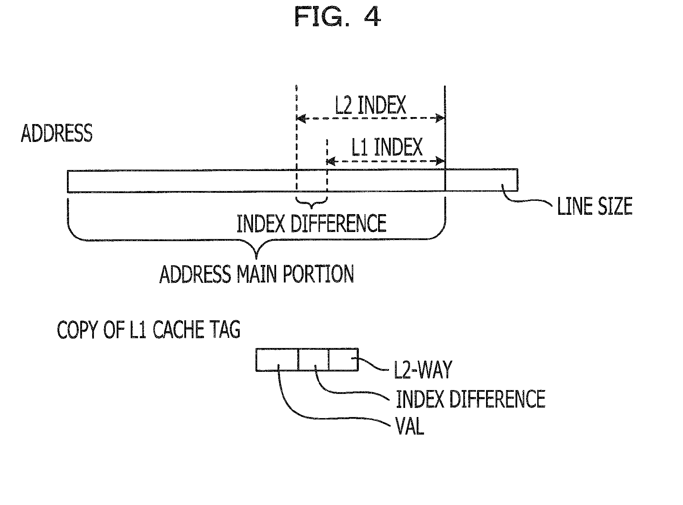

Fig. 4 illustrates how an index is created from an address. The address of a data block illustrated in Fig. 4 includes an address main portion and additional information such as a line size. In the embodiment, a part of the address main portion is used as the index.

Since the L1 cache is smaller in capacity than the L2 cache, the number of entries that may be registered in the L1 cache is also smaller than that for the L2 cache. Therefore, the L1 index for use in a search through the L1 cache is shorter than the L2 index for use in a search through the L2 cache. Since the L2 cache includes the L1 cache, the L2 index includes the L1 index.

To compare the address of data registered in the L2 cache tag 22 and the address of search target data, a the L2 cache tag 22 is searched through by using the L2 index input to the L2 cache tag 22 as a key. Then, the address registered for an entry in the L2 cache tag 22 and an index that is identical to the input L2 index and the search target address are compared. Since the two addresses being compared have an identical index portion, a comparison is made between respective upper portions of the address main portions with respect to the L2 index.

In a configuration in which the entire address is registered in the L1 cache tag 21, as in the search through the L2 cache, the L1 cache tag 21 is searched though by using the L1 index input to the L1 cache tag 21 as a key. Then, respective upper portions of the address obtained from the L1 cache tag 21 with respect to the L1 index and the search target address are compared to determine whether or not both the addresses coincide with each other.

Since the L2 cache includes the L1 cache, an entry registered in the L1 cache exists on the L2 cache. Therefore, if an entry in the L2 cache corresponding to an entry in the L1 cache can be uniquely identified, a search may be made through the L1 cache utilizing the results of a determination as to whether or not a hit is made in the L2 cache.

In order to uniquely correlate an entry in the L1 cache and an entry in the L2 cache, a difference between the L2 index and the L1 index is used. If the L2 cache includes a plurality of ways, that is, a plurality of entries, the number of which corresponds to the number of the ways, may be registered in the L2 cache for an identical L2 index, information specifying which way is targeted is also used to correlate an entry in the L1 cache and an entry in the L2 cache.

Thus, the L1 cache tags 21 may include VAL indicating whether or not the value exists in the L1 cache, an index difference between the L2 index and the L1 index, and L2-way specifying the way of the L2 cache. The physical amount of the L1 cache tag may be reduced by registering the VAL, the index difference, and the L2-way in the L1 cache tag and utilizing a hit in the L2 cache, in place of registering the entire address in the L1 cache tag.

Fig. 3 illustrates an exemplary configuration of a cache memory control apparatus according to a comparative example, in which the L1 cache is searched through by utilizing a hit in the L2 cache. The cache memory control apparatus illustrated in Fig. 3 includes L1 cache tags 31, an L2 cache tag 32, comparing sections 33 and 34, and a process determining section 35.

The L1 cache tags 31 are copies of tags of the L1 caches C0-1 to C7-1 possessed by the processor cores C0 to C7, and include VAL indicating whether or not the value exists, an index difference, and L2-way. The L2 cache tag 32 is a cache in which the entire address is registered, and includes the L1 caches.

The comparing section 33 compares the input search target address and the address registered in the L2 cache tag 32. When the search target address is input from an L2 pipeline, the L2 cache tag 32 outputs an entry with an L2 index that is identical to the input search target address. The comparing section 33 compares the search target address and the entry registered in the L2 cache tag 32 using respective upper portions of the addresses with respect to the L2 index.

In the case where the search target address and the entry registered in the L2 cache tag 32 coincide with each other, that is, the search target address is registered in the L2 cache tag 32, the comparing section 33 returns L2-HIT to the L2 pipeline. The L2-HIT indicates that the search target address is cached in the L2 cache memory.

In the case where the search target address and the entry registered in the L2 cache tag 32 coincide with each other, the comparing section 33 outputs the search target address and L2-HIT-way to the comparing section 34. The L2-HIT-way indicates the way of the L2 cache tag in which the address that is identical to the search target address is registered.

When the search target address is input from the L2 pipeline, the L1 cache tag 31 outputs an entry with an L1 index that is identical to the search target address. The output from the L1 cache tag 31 includes an index difference and L2-way.

The comparing section 34 compares the search target address and the address registered in the L1 cache memory. The comparing section 34 receives the address hit in the L2 cache tag 32 and the L2-HIT-way from the comparing section 33. The comparing section 34 compares the address difference received from the L1 cache tag 31 with a portion of the address hit in the L2 cache tag 32 received from the comparing section 33 that is equivalent to the address difference. The comparing section 34 also compares the L2-HIT-vvay received from the comparing section 33 and the L2-way received from the L1 cache tag 31. In the case where the address difference of the L1 cache tag 31 coincides with an equivalent portion of the address hit in the L2 cache tag 31 and the L2-HIT-varay and the L2-way coincide with each other, the comparing section 34 returns L1-HIT to the L2 pipeline. The L1-HIT indicates that the search target address is cached in the L1 cache memory.

The process determination 35 determines whether or not to retry a process for the search target address using the L2-HIT as the output of the comparing section 33 and the L1-HIT as the output of the comparing section 34. The output of the comparing section 34 is necessary for the process determining section 35 to make a determination. The output of the comparing section 34 is necessary because whether or not to retry a process differs depending on whether or not there is any processor core that caches the search target address in its L1 cache memory. Thus, the process determining section 35 inevitably operates after the comparison made by the comparing section 34.

According to the comparative example illustrated in Fig. 3, it is possible to reduce the physical amount of the L1 cache tag. However, the latency is degraded because a process determination is made after a determination as to the presence or absence of any processor core that caches the address in its L1 cache memory is made after a search is made through the L2 cache tag.

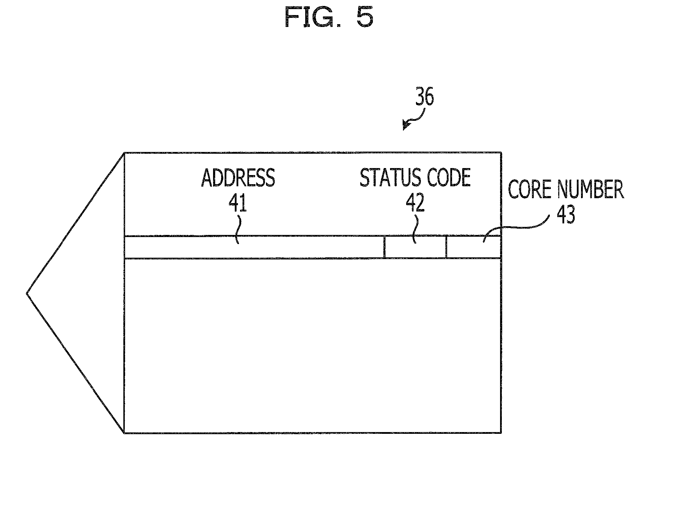

With the cache state of the L1 cache memory registered in the L2 cache tag, it is possible to know the cache state of the L1 cache memory by making a search through the L2 cache tag. Fig. 5 illustrates a comparative example in which the cache state of the L1 cache memory is registered in the L2 cache tag.

In the comparative example illustrated in Fig. 5, an L2 cache tag 36 includes a status code 42 and a core number 43 in addition to an address 41. The status code 42 is information for management indicating the cache state of the L1 cache memory. The status code 42 also indicates whether or not there is any processor core that caches the relevant address. The status code 42 indicates whether or not the address is cached in a single processor in the case where there is any processor core that caches the address, and indicates which way of the L1 cache the address is registered in the case where the address is cached in a single processor. The core number 43 is information for management identifying the processor core caching the relevant address in the case where the address is cached in a single processor core.

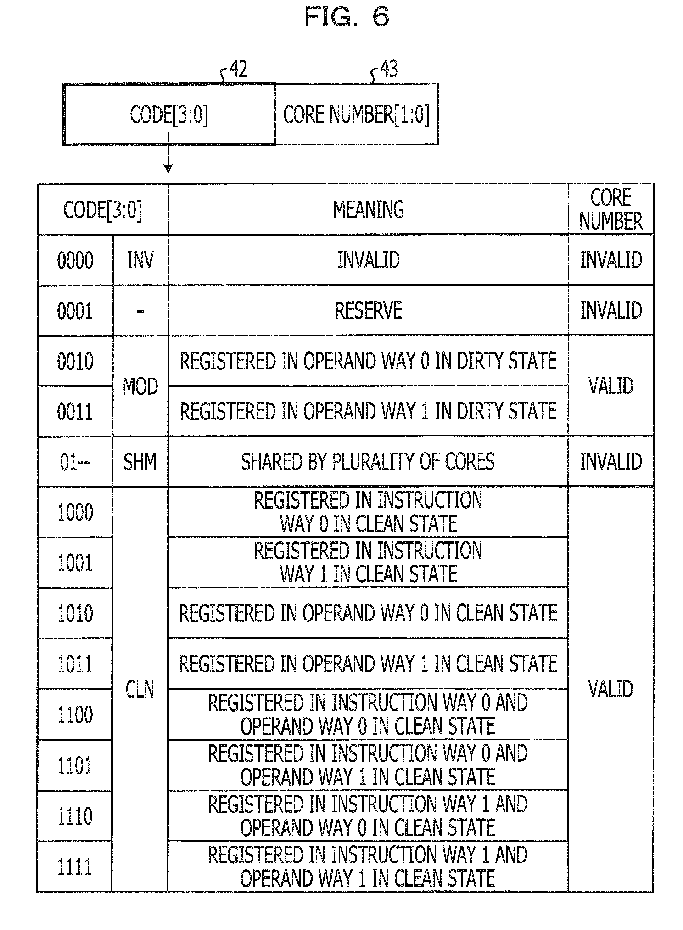

Fig. 6 illustrates examples of the status code 42 and the core number 43 in the comparative example illustrated in Fig. 5. In the example illustrated in Fig. 6, four processor cores with a 2-way instruction/operand separate cache are provided, and the status code 42 is 4-bit data and the core number 43 is 2-bit data.

The cache state of the L1 cache memory is roughly divided into four states, namely "INV", "MOD", "SHM", and "CLN". "INV" indicates an invalid state in which no processor core caches the data. "MOD" indicates a state in which a single processor core has the data registered in its L1 cache memory with the L1 cache memory and the L2 cache memory including different data, that is, in a dirty state. "MOD" occurs when data is to be rewritten, for example. "SHM" indicates a state in which a plurality of processor cores have the data registered in their L1 cache memory in a shared manner. "CLN" indicates a state in which a single processor core has the data registered in its L1 cache memory with the L1 cache memory and the L2 cache memory including substantially the same data, that is, in a clean state. For "CLN", there are three states according to how the data is treated in the single processor core, that is, registered only in the instruction cache, registered only in the operand cache, and shared by the instruction and operand caches.

In the example of Fig. 6, "0000" is assigned as the status code 42 to "INV". For "MOD", different values are assigned as the status code 42 depending on which way the data is registered in. In the example of Fig. 6, "0010" is assigned as the status code 42 to a state in which the data is registered in operand way 0 in a dirty state, and "0011" is assigned as the status code 42 to a state in which the data is registered in operand way 1 in a dirty state.

In Fig. 6, "01--" is assigned as the status code 42 to "SHM". This means that any status code 42 with the two upper bits being "01" specifies "SHM" irrespective of the value of the two lower bits.

For "CLN", different values are assigned as the status code 42 depending on whether the data is registered in the operand cache, whether the data is registered in the instruction cache, and which way of each cache the data is registered in.

In the example of Fig. 6, a status code "1000" is assigned to a state in which the data is registered in instruction way 0 in a clean state, and a status code "1001" is assigned to a state in which the data is registered in instruction way 1 in a clean state. Also, a status code "1010" is assigned to a state in which the data is registered in operand way 0 in a clean state, and a status code "1011" is assigned to a state in which the data is registered in operand way 1 in a clean state.

Likewise, a status code "1100" is assigned to a state in which the data is registered in instruction way 0 and operand way 0 in a clean state, and a status code "1101" is assigned to a state in which the data is registered in instruction way 0 and operand way 1 in a clean state. Also, a status code "1110" is assigned to a state in which the data is registered in instruction way 1 and operand way 0 in a clean state, and a status code "1111" is assigned to a state in which the data is registered in instruction way 1 and operand way 1 in a clean state. A status code "0001" is unused, that is, reserved.

The core number 43 identifies one of the processor cores. In the case where the target address is cached in a single processor core, the core number 43 is valid, and thus it is possible to identify the processor core that caches the target address in its L1 cache and the way in which the target address is registered. On the other hand, in the case where the target address is cached in a plurality of cores, information is compressed as SHM, and thus it is not possible to identify the processor cores that have the target address registered in their L1 cache. Therefore, in the example of Fig. 6, in the case where the target address of a store instruction is SHM, an invalidation process is performed for all the processor cores.

In the comparative example illustrated in Figs. 5 and 6, the process determination speed is increased by providing the L2 cache tag with information on the L1 cache and making a search through the L2 cache tag to obtain the state of the L2 cache and the L1 cache.

In the comparative example illustrated in Figs. 5 and 6, with an increased number of processor cores, an unnecessarily invalidation process for processor cores that actually do not cache the data may be performed, which may be a factor that decreases the processing performance of the processor. By adding a bit indicating whether or not each processor core caches the data to the management information to be added to the L2 cache tag, no invalidation process would be performed even in the case where the data is shared. However, increasing the physical amount of the L2 cache tag may degrade the use efficiency of the resources and increase the power consumption.

The configuration according to the embodiment reduces the physical amount of the L2 cache tag without degrading the latency or being affected by an increase in number of processor cores.

Returning to Fig. 1, the configuration of the cache memory control apparatus according to the embodiment will be described. The L1 cache tags 21 are copies of tags of the L1 caches C0-1 to C7-1 possessed by the processor cores C0 to C7, and include VAL indicating whether or not the value exists, an index difference, and L2-way as in the comparative example illustrated in Fig. 3.

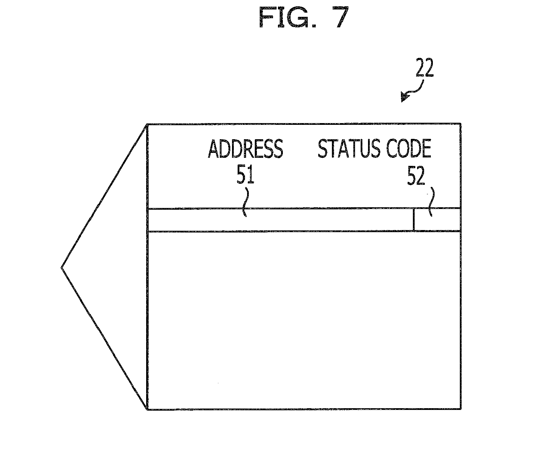

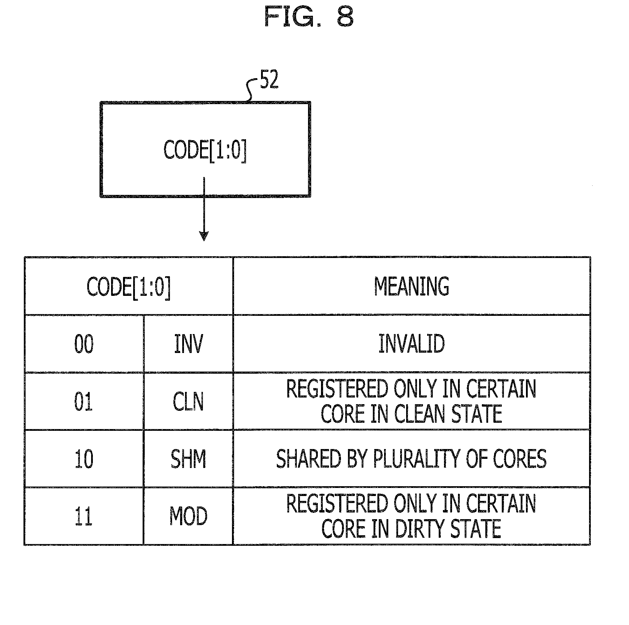

The L2 cache tag 22 is a cache in which the entire address is registered, and includes the L1 caches. As illustrated in Fig. 7, the L2 cache tag 22 according to the embodiment includes a status code 52 in addition to an address 51. Fig. 8 illustrates examples of the status code 52.

In the example of Fig. 8, the status code 52 indicates four cache states of the L1 cache memory, namely "INV", "CLN", "SHM", and "MOD", using 2-bit data. In Fig. 8, a status code "00" is assigned to "INV", which indicates an invalid state in which no processor core caches the data.

A status code "01" is assigned to "CLN", which indicates a state in which a single processor core has the data registered in its L1 cache memory with the L1 cache memory and the L2 cache memory including substantially the same data, that is, in a clean state.

A status code "10" is assigned to "SHM", which indicates a state in which a plurality of processor cores have the data registered in their L1 cache memory in a shared manner. A status code "11" is assigned to "MOD", which indicates a state in which a single processor core has the data registered in its L1 cache memory with the L1 cache memory and the L2 cache memory including different data, that is, in a dirty state.

Different from the status code 42 according to the comparative example, the status code 52 illustrated in Fig. 8 does not depend on the number of processor cores or the number of ways. Therefore, the status code 42 requires only two bits, which is necessary to indicate four states, even if the number of processor cores or the number of ways is increased.

The comparing section 23 illustrated in Fig. 1 compares a search target address supplied from the outside and the address registered in the L2 cache tag 22. When the search target address is input from the L2 pipeline, the L2 cache tag 22 outputs an entry with an L2 index that is identical to the search target address. The comparing section 23 compares the search target address and the entry registered in the L2 cache tag 22 using respective upper portions of the addresses with respect to the L2 index.

In the case where the search target address and the entry in the L2 cache tag 22 coincide with each other, that is, the search target address is registered in the L2 cache tag 22, the comparing section 23 returns L2-HIT and the value of the status code 52 to the L2 pipeline. The L2-HIT indicates that the search target address is cached in the L2 cache memory. Further, in the case where someCore-L1I-HIT is used as a control flag to be discussed later, the comparing section 23 returns someCore-L1I-HIT to the L2 pipeline. The someCore-L1I-HIT is information obtained by taking an OR of hits in the instruction cache tags of all the processor cores.

In the case where the search target address and the entry in the L2 cache tag 22 coincide with each other, the comparing section 23 also outputs the search target address and L2-HIT-way to the comparing section 24. The L2-HIT-way indicates the way of the L2 cache in which the address that is identical to the search target address is registered.

When the search target address is input from the L2 pipeline, the L1 cache tag 21 outputs an entry with an L1 index that is identical to the search target address. The output from the L1 cache tag 21 includes an index difference and L2-way.

The comparing section 24 compares the search target address and the address registered in the L1 cache memory. The comparing section 24 has received from the comparing section 23 the address hit in the L2 cache tag 22 and the L2-HIT-way. The comparing section 24 compares the address difference of the L1 cache tag 21 with an equivalent portion of the address hit in the L2 cache tag 22, and also compares the L2-HIT-way and the L2-way. In the case where the address difference of the L1 cache tag 21 coincides with an equivalent portion of the address hit in the L2 cache tag 22 and the L2-HIT-way and the L2-way coincide with each other, the comparing section 24 returns L1-HIT to the L2 pipeline. The L1-HIT indicates that the search target address is cached in the L1 cache memory.

The first process determining section 25 uses the output of the comparing section 23 to determine whether or not an invalidation or data request is necessary for the processor core possessing the relevant block. The output of the comparing section 24 is not used in the determination made by the first process determining section 25.

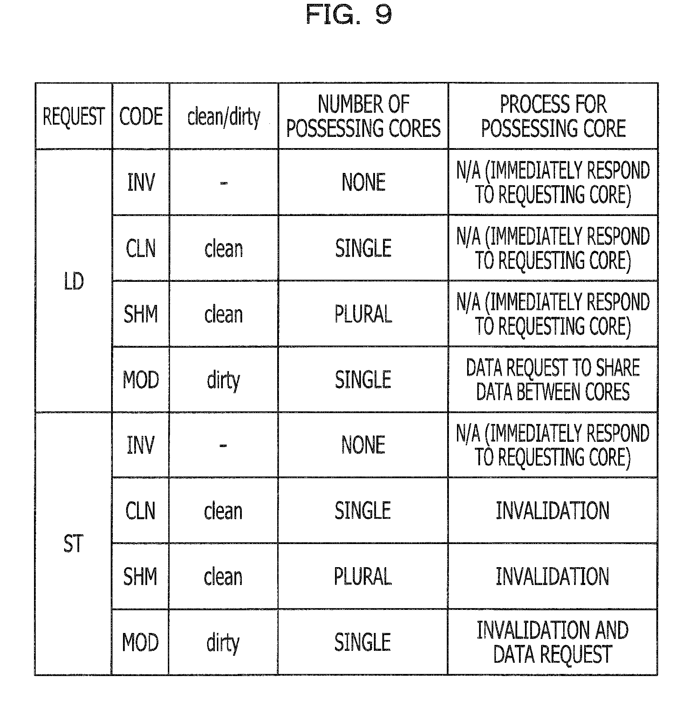

Fig. 9 illustrates a determination process performed by the first process determining section 25. If the value of the status code 52 is "INV", there is no processor core caching the address (hereinafter referred to as a "possessing core"). If the value of the status code 52 is "CLN", there is a single possessing core caching the data in a clean state. If the value of the status code 52 is "SHM", there are a plurality of possessing cores caching the data in a clean state. If the value of the status code 52 is "MOD", there is a single possessing core caching the data in a dirty state.

If the instruction output by the processor core is a load instruction, that is, "LD", and the status code of the operand is "INV", "CLN", or "SHM", no process is necessary for the possessing core, and thus it is possible to immediately respond to the processor core making the request, that is, the requesting core. On the other hand, if the instruction output by the processor core is a load instruction and the status code of the operand is "MOD", a data request is made for the possessing core to establish a clean state so that the data is shared between the processor cores.

If the instruction output by the processor core is a store instruction, that is, "ST", and the status code of the operand is "INV", no process is necessary for the possessing core, and thus it is possible to immediately respond to the requesting core. On the other hand, if the instruction output by the processor core is a store instruction and the status code of the operand is "CLN" or "SHM", a cache invalidation request is made for the possessing core. If the instruction output by the processor core is a store instruction and the status code of the operand is "MOD", a cache invalidation request and a data request are made for the possessing core.

In this way, the first process determining section 25 determines whether or not a process for the possessing core is necessary. According to the determination made by the first process determining section 25, it is not possible to identify which processor core is the actual possessing core. If the first process determining section 25 determined that no process is necessary for the possessing core and a process may be performed for the requesting core, it is possible to determine whether or not a retry is necessary without waiting for the results of the search through the L1 cache tag because it is known which processor core is the requesting core.

On the other hand, in the case where the first process determining section 25 determined that a process for the possessing core is necessary, the second process determining section 26 first identifies the possessing core, and finally determines whether or not a retry is necessary. The second process determining section 26 may identify the possessing core using the L1-HIT as the output of the comparing section 24. Therefore, the second process determining section 26 may select factors for a retry for each processor core, such as management of the number of resources for each processor core, based on the L1-HIT to determine whether or not it is possible to continue a process for the possessing core, that is, whether or not a retry is necessary.

As has been described above, the cache memory control apparatus according to the embodiment may quickly determine whether or not a retry is necessary, if no process is necessary for the possessing core, without waiting for the results of a search through the L1 cache tag, that is, without degrading the latency. According to the embodiment, information to be added to the L2 cache tag 22 does not depend on the number of processor cores or the number of ways. Thus, the physical size of the L2 cache tag may be reduced even for a large-scale system.

Next, a modified cache memory control apparatus will be described. Some processor cores issue two different types of store instructions depending on whether or not the processor core caches data in its own operand cache in a shared version when the processor core issues a store instruction.

In the case where the core requesting a store instruction caches data in its operand cache in a shared version, another processor core may also cache the identical address. Therefore, the requesting core makes an inquiry to the L2 cache. In the case where the address is cached only in the operand cache of the requesting core as a result of a determination made by the L2 cache, it is desirable to respond to the requesting core that the store instruction is executable without unnecessarily performing invalidation for performance reasons.

When seen from the L2 cache memory, in the case where a store instruction issued with the requesting core itself caching information is "CLN", the requesting core is the possessing core and if the instruction cache of the requesting core does not cache information, that is, only the operand cache of the requesting core caches information, and there is no desire to perform invalidation for the possessing core. On the other hand, if a store instruction issued with the requesting core itself not caching information is "CLN", a certain processor core other than the requesting core is the possessing core.

Therefore, from the viewpoint of discriminating operation of the L2 cache and enhancing a protocol check, it is preferable to discriminate a store instruction issued with the operand cache of the requesting core not caching information and a store instruction issued with the operand cache of the requesting core caching information in a shared version. In the following description, the store instruction issued with the operand cache of the requesting core not caching information is defined as ST1, and the store instruction issued with the operand cache of the requesting core caching information in a shared version is defined as ST2.

In the operation of the first process determining section 25 illustrated in Fig. 9, the store instruction ST1 and the store instruction ST2 are not discriminated, and an invalidation process is performed in the case where the status code 52 is CLN even if the possessing core is the requesting core.

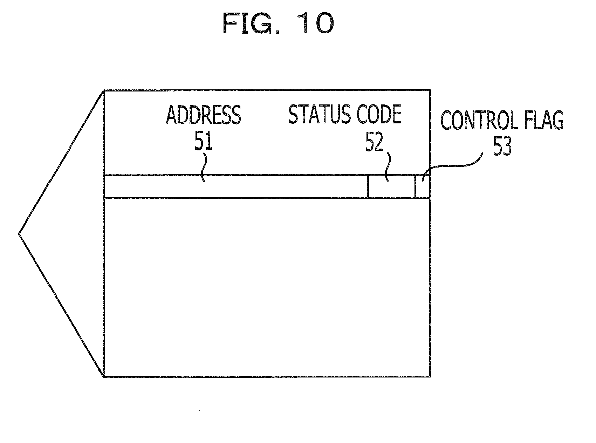

On the other hand, in the modified cache memory control apparatus, a control flag 53 is added to the L2 cache tag as illustrated in Fig. 10 in order to perform control with discrimination between the store instructions ST1 and ST2. The control flag 53 is 1-bit data storing information on someCore-L1I-HIT.

The someCore-L1I-HIT is an OR of information indicating the hit states of the instruction cache tags of all the processor cores, and is updated with an OR of hits in the instruction cache tags of all the processor cores obtained from the L1 cache tags 21 when the L2 cache tag 22 is updated. The control flag 53 is obtained as an OR of information, and thus is provided as one bit irrespective of the number of cores.

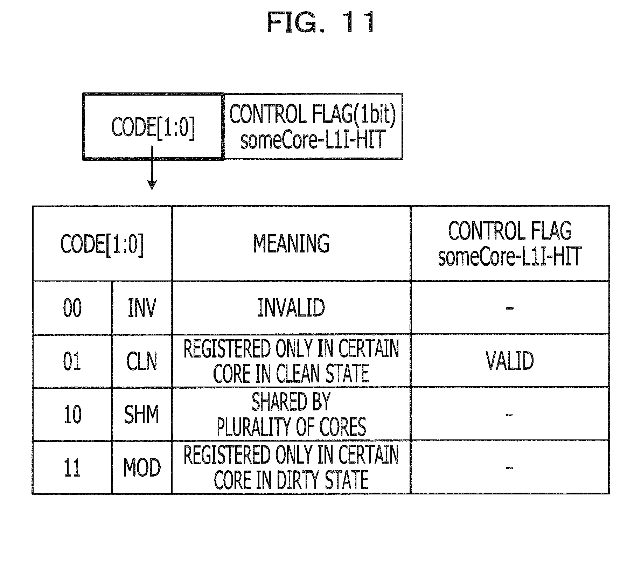

As illustrated in Fig. 11, with the status code 52 defined in substantially the same way, and in the case where the value of the status code is "CLN", the someCore-L1I-HIT is set to be valid. In other cases of Fig. 11, the someCore-L1I-HIT is not set to be valid.

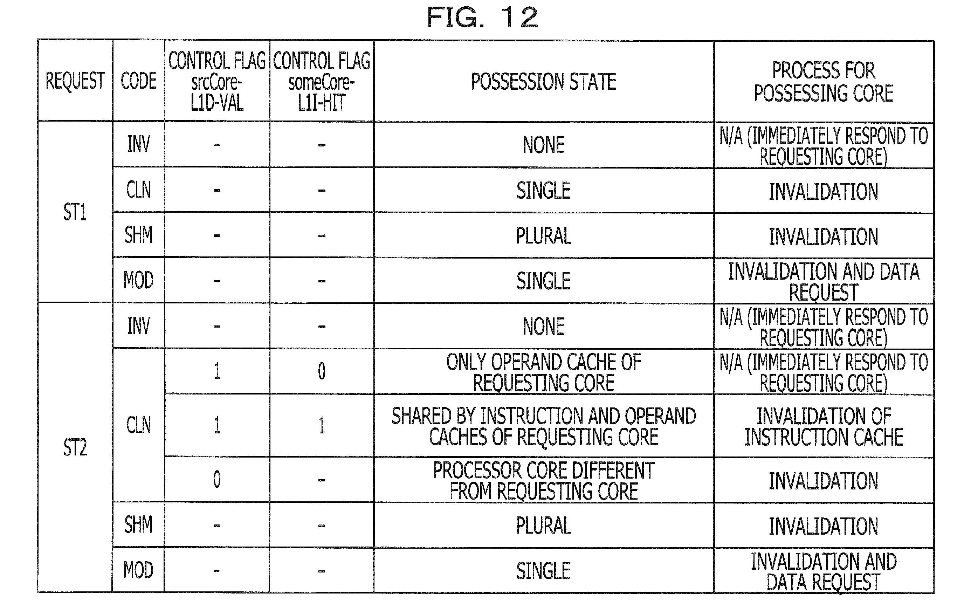

Fig. 12 illustrates a determination process performed by the first process determining section 25 in the case where the someCore-L1I-HIT is used. For the load instruction and the store instruction ST1, process determinations are made in substantially the same way as the case of Fig. 9. In the case where the store instruction ST2 is issued and the status code 52 is "CLN", processes that are different from the example of Fig. 9 are performed.

In the case where the store instruction ST2 is issued and the status code 52 is "CLN", it is indicated that a certain single processor core caches information. Thus, the circumstances in which the store instruction ST2 is issued and the status code 52 is "CLN" include the case where the operand cache of the requesting core caches information in a shared version. Except for the case where the operand cache of the requesting core caches information in a shared version, operations that are substantially the same as the process determinations of Fig. 9 are performed.

In the process determinations illustrated in Fig. 12, a control flag srcCore-L1D-VAL is used for determination in addition to the control flag someCore-L1I-HIT in the case where the store instruction ST2 is issued and the status code 52 is "CLN". The control flag srcCore-L1D-VAL is not hit information. The control flag srcCore-L1D-VAL is VALID information indicating whether or not an entry with an L1 index that is substantially identical to the target address is registered in the operand cache of the requesting core. Therefore, in the determination process of Fig. 12, it is possible to obtain the determination results immediately from the copies of the L1 cache tag of the requesting core without making a comparison between the addresses.

If the store instruction ST2 is issued and the state of the L2 cache memory is CLN, the possessing core is the requesting core. In this case, there are three possession states according to how the data is treated in the requesting core, that is, possessed only in the instruction cache, possessed only in the operand cache, and shared by the instruction and operand caches. In addition, if the control flag srcCore-L1D-VAL is "1", the three possession states mentioned above may be reduced to either of two possession states, namely possessed only in the operand cache and shared by the instruction and operand caches. It follows that an entry with an L1 index that is substantially identical to the operand of the store instruction ST2 is registered in the L1 cache.

In the L1 cache, a replace process or a new registration process is not performed for a way for which registration is about to be performed, at substantially the same as the registration. Therefore, if a hit is made in the L1 operand cache in a shared version to issue the store instruction ST2 and the srcCore-L1D-VAL is "1", it means that the operand of the store instruction is already registered in the L1 cache memory.

In other words, if the store instruction ST2 is issued and the srcCore-L1D-VAL is "1", a hit in the operand cache is determined without a comparison made by the comparing section 24.

In the case where the control flag srcCore-L1D-VAL is "1" and if the someCore-L1I-HIT is "1", this indicates that information is shared by the instruction and operand caches of the requesting core. In this case, it is necessary to invalidate the instruction cache of the requesting core.

In the case where the control flag srcCore-L1D-VAL is "1" and if the someCore-L1I-HIT is "0", this indicates that information is cached only in the operand cache of the requesting core. In this case, no process is necessary for the possessing core, and thus it is possible to immediately respond to the processor core making the request, that is, the requesting core.

As has been described above, based on a fact that the status code is CLN, that is, information is cached in a single processor core, and using the control flags someCore-L1I-HIT and srcCore-L1D-VAL, the first process determining section may make a determination for an increased number of cases. Thus, adding one bit corresponding to the additional control flag someCore-L1I-HIT enables to make more detailed determinations, which improves the latency.

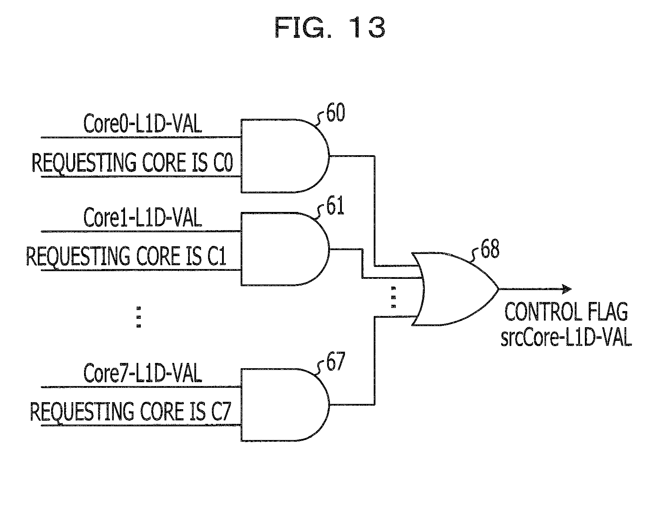

Fig. 13 illustrates an exemplary logical circuit that generates the control flag srcCore-L1D-VAL. An AND circuit 60 corresponds to the processor core C0, and outputs "1" in the case where the requesting core is the processor core C0 and the value of Core0-L1D-VAL is "1". An AND circuit 61 corresponds to the processor core C1, and outputs "1" in the case where the requesting core is the processor core C1 and the value of Core1-L1D-VAL is "1".

Likewise, AND circuits 62 to 67 respectively correspond to the processor cores C2 to C7. The AND circuits 62 to 66 are not illustrated in Fig. 13. The AND circuit 67 corresponds to the processor core C7, and outputs "1" in the case where the requesting core is the processor core C7 and the value of Core7-L1D-VAL is "1". The outputs of the AND circuits 60 to 67 are input to an OR circuit 68 to obtain the control flag srcCore-L1D-VAL.

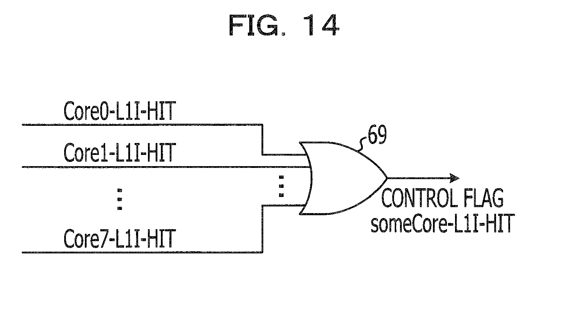

Fig. 14 illustrates an exemplary logical circuit that generates the control flag someCore-L1I-HIT. Signals from Core0-L1I-HIT to Core7-L1I-HIT are input to an OR circuit 69 to obtain the someCore-L1I-HIT.

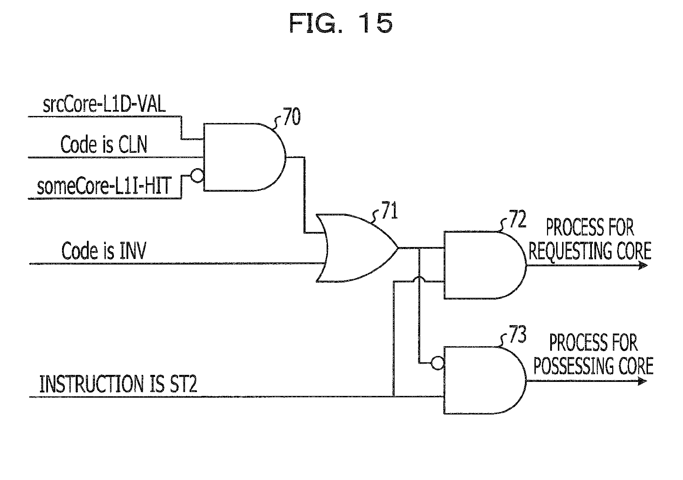

Fig. 15 illustrates a circuit that makes a determination as to a store instruction performed by the first process determining section 25. An AND circuit 70 illustrated in Fig. 15 outputs "1" when the srcCore-L1D-VAL is "1", the status code is "CLN", and the someCore-L1I-HIT is "0". An OR circuit 71 outputs "1" in the case where the status code is "INV" or the AND circuit 70 outputs "1".

An AND circuit 72 outputs "1" in the case where the instruction is a store instruction ST and the OR circuit 71 outputs "1". When the AND circuit 72 outputs "1", this indicates that a process for the requesting core should be performed.

An AND circuit 73 outputs "1" in the case where the instruction is a store instruction ST and the OR circuit 71 outputs "0". When the AND circuit 73 outputs "1", it means that a process for the possessing core should be performed.

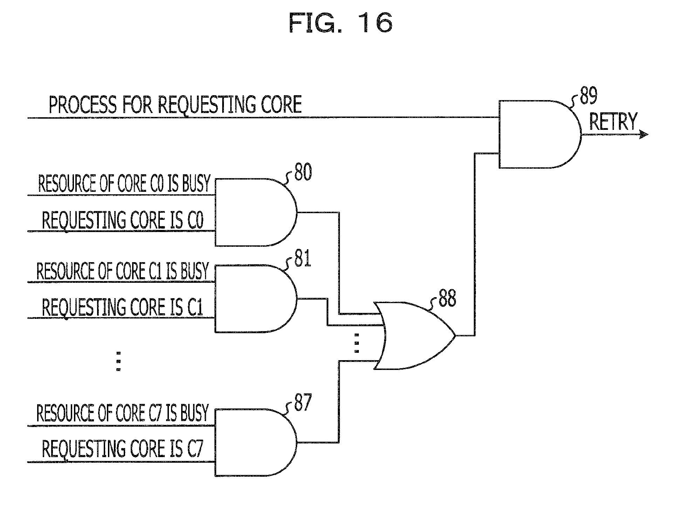

Fig. 16 illustrates an exemplary logical circuit that makes a determination as to a retry of a process for the requesting core. The circuit illustrated in Fig. 16 is provided in the second process determining section 26. An AND circuit 80 illustrated in Fig. 16 corresponds to the processor core C0, and outputs "1" in the case where the requesting core is the processor core C0 and the resource of the core C0 is busy. An AND circuit 81 corresponds to the processor core C1, and outputs "1" in the case where the requesting core is the processor core C1 and the resource of the core C1 is busy.

Likewise, AND circuits 82 to 87 respectively correspond to the processor cores C2 to C7. The AND circuits 82 to 86 are not illustrated in Fig. 16. The AND circuit 87 corresponds to the processor core C7, and outputs "1" in the case where the requesting core is the processor core C7 and the resource of the core C7 is busy.

An OR circuit 88 outputs "1" if any of the AND circuits 80 to 87 outputs "1". An AND circuit 89 outputs "1" in the case where the process is a process for the requesting core and the OR circuit 88 outputs "1". When the AND circuit 89 outputs "1", this indicates that a retry is necessary.

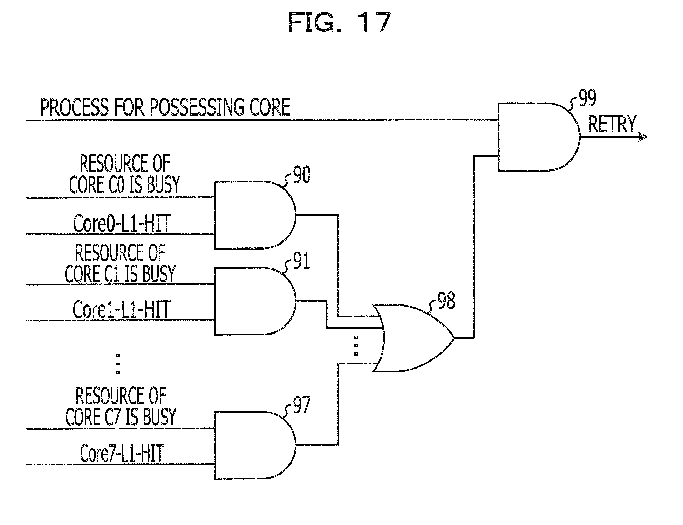

Fig. 17 illustrates an exemplary logical circuit that makes a determination as to a retry of a process for the possessing core. The circuit illustrated in Fig. 17 is provided in the second process determining section 26. An AND circuit 90 illustrated in Fig. 17 corresponds to the processor core C0, and outputs "1" in the case where Core0-L1-HIT is "1" and the resource of the core C0 is busy. An AND circuit 91 corresponds to the processor core C1, and outputs "1" in the case where Corel-L1-HIT is "1" and the resource of the core C1 is busy.

Likewise, AND circuits 92 to 97 respectively correspond to the processor cores C2 to C7. The AND circuits 92 to 96 are not illustrated in Fig. 17. The AND circuit 97 corresponds to the processor core C7, and outputs "1" in the case where Core7-L1-HIT is "1" and the resource of the core C7 is busy.

An OR circuit 98 outputs "1" if any of the AND circuits 90 to 97 outputs "1". An AND circuit 99 outputs "1" in the case where the process is a process for the possessing core and the OR circuit 98 outputs "1". When the AND circuit 99 outputs "1", this indicates that a retry is necessary.

As has been described above, in the cache memory control apparatus and the cache memory control method according to the embodiment, the status code indicating whether or not there is any processor core that holds the target address in its L1 cache memory is affixed to the L2 cache tag. Then, the first process determining section determines whether or not a process for the possessing core is necessary, and in the case where a process for the possessing core is necessary, the possessing core is identified using the L1 cache tag.

Thus, according to the cache memory control apparatus of the embodiment, it is possible to determine whether or not a retry is necessary without waiting for the results of a search through the L1 cache tag unless a process for the possessing core is necessary. Even in the case where a process for the possessing core is necessary, it is possible to make a determination without waiting for a hit in the L1 cache, as opposed to the related art in which it is necessary to wait for a hit in the L1 cache in order to make an accurate determination as indicated in the example with ST2. Therefore, it is possible to improve the latency while reducing the physical amount of the L1 cache tag and the L2 cache tag without being affected by an increase in number of cores. In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A cache memory control apparatus that controls a second cache memory shared by a plurality of processor cores each including a first cache memory , comprising:
a first cache tag memory that holds, in correlation with an address of information held in the first cache memory of each of the plurality of processor cores , a first cache index used for searching the first cache memory and an index difference between the first cache index and a second cache index;
a second cache tag memory that holds a registered address of information registered in the second cache memory and cache state information which indicates whether any of the first cache memories holds information registered at the registered address, the registered address and cache state information are in correlation with the second cache index that is included in the registered address;
a first comparing section that searches the second cache tag memory using the second cache index included in a search target address as a key, and compares the registered address with the search target address;
a first process determining section that, when the search target address and the registered address coincide with each other, determines whether an invalidation of one of the first cache memories or a data request to one of the plurality of processor cores possessing a relevant block of the information is necessary based on the cache state information corresponding to the search target address;
a second comparing section that searches the first cache tag memory using the first cache index included in the search target address as a key, and compares the index difference obtained as a result of the search with a portion of the second cache index of the search target address that corresponds to the index difference; and
a second process determining section that, when the first process determining section determines that the invalidation or the data request is necessary, further determines whether a retry of a processed instruction is necessary based on results of the comparison made by the second comparing section.

2. The cache memory control apparatus according to claim 1,
wherein the second cache tag memory holds, as the cache state information, two-bit data indicating one of four states including a state in which no processor core holds the search target address in its first cache memory, a state in which a single processor core holds the search target address in its first cache memory, a content of which is substantially identical to a content of the second cache memory, a state in which a single processor core holds the search target address in its first cache memory, the content of which is updated, and a state in which a plurality of processor cores share the search target address.

3. The cache memory control apparatus according to claim 1 or 2,
wherein when one of the plurality of processor cores issues a load instruction, and further when information at an address designated by the load instruction is possessed by a single processor core in an updated state, the first process determining section determines that a process for requesting data from the one possessing core is necessary.

4. The cache memory control apparatus according to claim 1,
wherein when one of the plurality of processor cores issues a store instruction, and further when there is no processor core that holds information at an address designated by the store instruction in its first cache memory, the first process determining section determines that no process is necessary for plurality of processor cores other than the one processor core issuing the instruction.

5. The cache memory control apparatus according to any one of claims 1 to 4,
wherein the second cache tag memory further holds, in correlation with the registered address, control information indicating whether or not at least one of the plurality of processor cores holds information at the registered address as an instruction cache, and
in the case where one of the plurality of processor cores issues a store instruction designating an address of information held in its own first cache memory, and if the control information indicates that no processor core holds the information at the address designated by the store instruction as an instruction cache, the cache state information indicates that a single processor core holds the information at the address designated by the store instruction in its first cache memory, the content of which is substantially identical to the content of the second cache memory, and a value of the information at the address designated by the store instruction is registered in the first cache tag memory , the first process determining section determines that no process is necessary for processor cores other than the processor core issuing the instruction.

6. The cache memory control apparatus according to any one of claims 1 to 5,
wherein the second cache tag memory includes a plurality of ways; and
the first cache tag memory further holds, in correlation with the address of information held by the plurality of processor cores in their first cache memory, a way of the second cache tag memory in which the information at the address is registered.

7. A cache memory control method for controlling a second cache memory shared by a plurality of processor cores each including a first cache memory, comprising:
searching through a first cache tag memory using a first cache index of a search target address as a key, the first cache tag memory holds, in correlation with an address of information held by each of the plurality of processor cores in their first cache memories, a first cache index being for use in a search through the first cache memory and an index difference between the first cache index and the second cache index;
searching a second cache tag memory using a second cache index of a search target address as a key, the second cache index is included in a registered address of information registered in the second cache memory, the second cache tag memory holds the registered address and cache state information in correlation with the second cache index, the cache state information indicating whether any of the plurality of processor cores holds the information registered at the registered address in its first cache memory;
comparing the registered address obtained from the second cache tag memory with the search target address;
when the search target address and the registered address coincide with each other, determining whether an invalidation or data request for one of the plurality of processor cores possessing a relevant block of the information based on the cache state information is necessary;
comparing a combination of the index difference and the first cache index of the search target address obtained from the first cache tag memory, and the second cache index of the search target address; and
determining whether a retry of an instruction is necessary in the case where an invalidation or data request for a processor core possessing the relevant block is necessary.

8. A computer program which, when executed on a computing device, causes the computing device to carry out a method according to claim 7.
